# EUROPEAN PATENT SPECIFICATION

(11) **EP 3 404 373 B1**
(45) Date of publication and mention of the grant of the patent: **04.03.2020**
(21) Application number: 17171523.8
(22) Date of filing: 17.05.2017
(51) Int. Cl.: G01F 1/684, G01F 1/688, G01F 1/696

(54) **FLOW SENSOR WITH THERMOCOUPLES**
DURCHFLUSSSENSOR MIT THERMOELEMENTEN
CAPTEUR DE FLUX AVEC THERMOCOUPLES

(43) Date of publication of application: 21.11.2018
(73) Proprietor: Sensirion AG, 8712 Stäfa (CH)
(72) Inventor: Hornung, Mark, 8712 Stäfa (CH); Wüest, Robert, 8712 Stäfa (CH); Figi, Harry, 8712 Stäfa (CH)
(74) Representative: Toleti, Martin

(56) References cited:
- EP-A1- 1 840 535
- EP-A1- 3 021 091
- KR-A- 20090 052 173

## Description

### Technical Field

The invention relates to a device for measuring the flow of a fluid that has a heater and at least one sensing thermocouple integrated on a substrate, in particular a semiconductor substrate.

### Background Art

Such device is adapted to derive the flow of the fluid from a signal measured by the at least one sensing thermocouple. This type of flow sensor is e.g. described in US 2003/0115952

EP 1 094 306 describes a flow sensor using a pair of sensing thermocouples for measuring the flow of a fluid as well as a pair of monitoring thermocouples whose signals are used for obtaining a more precise flow rate.

EP 1 840 535 A1 discloses a flow sensor comprising a heater arranged between two sensing thermopiles. In addition, at least one monitoring thermocouple is provided. A junction of the monitoring thermocouple closest to the heater is arranged closer to the heater than each of the junctions of the sensing thermocouples.

EP 3 021 091 A1 discloses a thermal flow meter that can continuously detect a flow rate with high accuracy even if a contamination is deposited. Such thermal flow meter includes a semiconductor member in which a thin area is provided, a heat generator that is provided in the thin area to heat a measurement target gas, temperature difference detecting means for detecting at least one of a temperature difference in a flow direction of the measurement target gas in the thin area and in an area on an upstream side of the heat generator and a temperature difference in the flow direction of the measurement target gas in the thin area and in an area on a downstream side of the heat generator, heat capacity calculating means for calculating heat capacity in the thin area based on a temperature difference detected by the temperature difference detecting means; and thermal conductivity change amount estimating means for estimating a thermal conductivity change amount in the thin area based on the heat capacity calculated by the heat capacity calculating means.

### Disclosure of the Invention

It is an object of the present invention to provide means for improving the accuracy of such a device. This object is achieved by a flow sensor according to the independent claim.

Accordingly, at least one pair of monitoring thermocouples for generating a monitoring signal is provided on the substrate. One junction of the monitoring thermocouples, however, is not arranged closer to the heater than the corresponding junction/s of the sensing thermocouples/s as it is in the art, but is arranged at the same distance from the heater as is/are the corresponding junctions of the one or more sensing thermocouples, or at an even larger distance. The term "equal distance" or "at the same distance" shall include a tolerance of 10% with respect to a length of the corresponding sensing thermocouple. For example, a sensing thermocouple with a length of 10 units allows the junction of the monitoring thermocouple to be placed by a maximum of 1 unit closer to the heater than the corresponding junction of the sensing thermocouple, which position of the junction of the monitoring thermocouple and accordingly its distance to the heater still is considered to be equal to the distance of the corresponding junction of the sensing thermocouple.

In the above mentioned document of the art EP 1 840 535 A1, a very close placement of the junction of the monitoring thermocouple is suggested amongst others for measuring a heater temperature by the monitoring thermocouple. However, it was found, that in specific applications, an arrangement of the one or more monitoring thermocouples so close to the heater, and in particular closer to the heater than the corresponding sensing thermocouples, is not beneficial. This is in particular the case, when the signal of the monitoring thermocouples is primarily used for compensation of drifts etc., and not for controlling the heater, for example. It was observed, that in particular in case of decreasing flows of the fluid and therefore in case of the fluid having a decreasing cooling effect on the heater, a heat propagation from the heater at least to the downstream sensing thermocouple/s requires a certain time. Accordingly, in the event of the fluid pulsing at what is considered a high frequency in the context of fluids, such as at 50 Hz or more, or at 100 Hz or more, which implies a rapid change of conditions, the monitoring thermocouple of the art may see a temperature that is different, and especially higher that the temperature that is measured by the sensing thermocouple at the same time. Hence, whenever the frequency of pulses in the fluid is in the order of the sampling frequency at which measurements may be taken by the sensing and the monitoring thermocouples, drift compensation based on the corresponding signals may not be as precise as desired in view of the monitoring thermocouple and the sensing thermocouple measuring phase shifted temperature signals owed to thermal inertia of the system.

Therefore, it is suggested to "retract" the monitoring thermocouples of EP 1 840 535 A1, and allow their junction closest to the heater be at maximum as close as the corresponding junction of the sensing thermocouple, tolerances as laid out above included, e.g. owed to manufacturing. This ensures that sensing and monitoring thermocouples do not measure a phase shifted signal in the above scenarios, such that compensation may become more accurate even in the above scenarios.

The fluid may include a liquid or a gas. Pulsing in the above context includes both, an increase in magnitude followed by a falling down in magnitude, all in one direction, as well as a reversal of flow direction.

Finally, a resulting signal, which is based on voltages measured across the sensing thermocouples and the monitoring thermocouples, is proportional to the flow of the fluid. The measurement approach is based on a flow-dependent heating of the sensing thermocouples.

By arranging the monitoring thermocouples parallel to the sensing thermocouples, strain will affect all thermocouples in similar manner, which allows for improved signal correction.

In one advantageous embodiment, the device comprises means for generating the resulting signal proportional to the ratio of a sensing signal and a monitoring signal. The sensing signal is determined as difference between the voltages measured across the sensing thermocouples/thermopile on the one side of the heater, e.g. at the downstream location, and across the sensing thermocouples/thermopile on the other side of the heater, e.g. at the upstream location. The monitoring signal preferably is determined as the sum of the voltages measured across the monitoring thermocouple/s on the one side of the heater, e.g. at the downstream location, and across the monitoring thermocouple/s on the other side of the heater, e.g. at the upstream location. The ratio of these signals is less dependent on the Seebeck constant and other inherent properties of the thermocouples.

Another advantageous embodiment of the device uses an analog/digital converter, which converter has a reference input and generates a digitized value of the sensing signal normalized by a signal at the reference input. The monitoring signal is applied to the reference input. The advantages of this measure are two-fold. First, the digitized signal corresponds to the ratio of the sensing signal and the monitoring signal, with the advantageous consequences mentioned above. Second, the resolution of the converter is decreased at low flows (where the monitoring signal is large), while it is increased at high flows (where the monitoring signal is small) - this is advantageous because the dependence of the sensing signal on the flow decreases with increasing flow.

Yet another advantageous embodiment of the device for measuring the flow of a fluid comprises the substrate, the heater arranged on the substrate, as well as at least one first and at least one second sensing thermocouple arranged on the substrate on opposite sides of the heater for generating the sensing signal proportional to a temperature difference between a location upstream and downstream from the heater, wherein the junction of the sensing thermocouples closest to the heater is arranged at a first distance from the heater. Further the device comprises at least a first and a second monitoring thermocouple arranged on the substrate on opposite sides of the heater in parallel to the sensing thermocouples for generating the monitoring signal, wherein the junction of the monitoring thermocouples closest to the heater is arranged at a second distance from the heater, wherein the second distance is equal to or more than the first distance. Further the device comprises a control circuit adapted to measure the flow of the fluid over the heater and the sensing thermocouples subject to the sensing signal and the monitoring signal, in that the second distance is equal to or more than the first distance.

In the embodiment, the device comprises a hole or recess in the substrate generating a membrane extending over the hole or recess. Advantageously the heater, the sensing thermocouples and the monitoring thermocouples are arranged at least partially on or in the membrane.

The junctions of the first and the second sensing thermocouple most distant from the heater and junctions of the first and the second monitoring thermocouple most distant from the heater are arranged on or in the membrane.

As an alternative in this embodiment, the junctions of the first and the second sensing thermocouple most distant from the heater are arranged on or in the membrane and junctions of the first and the second monitoring thermocouple most distant from the heater are arranged on or in the substrate outside the membrane, or vice versa.

### Brief Description of the Drawings

These and other advantageous embodiments are illustrated in more detail in the dependent claims as well as in the following description. This description makes reference to the attached figures, where
Fig. 1 is a top view on a first embodiment of the device,
Fig. 2 is a schematic sectional view along line II-II of Fig. 1,
Fig. 3 is a top view on a second embodiment,
Fig. 4 is a block diagram of an embodiment of a circuitry of the device, and
Fig. 5 illustrates a sensing signal ΔT, a monitoring signal TP, and a digitized value of the sensing signal ΔT as a function of mass flow with constant and non-constant Vref input.

### Detailed Description of the Drawings

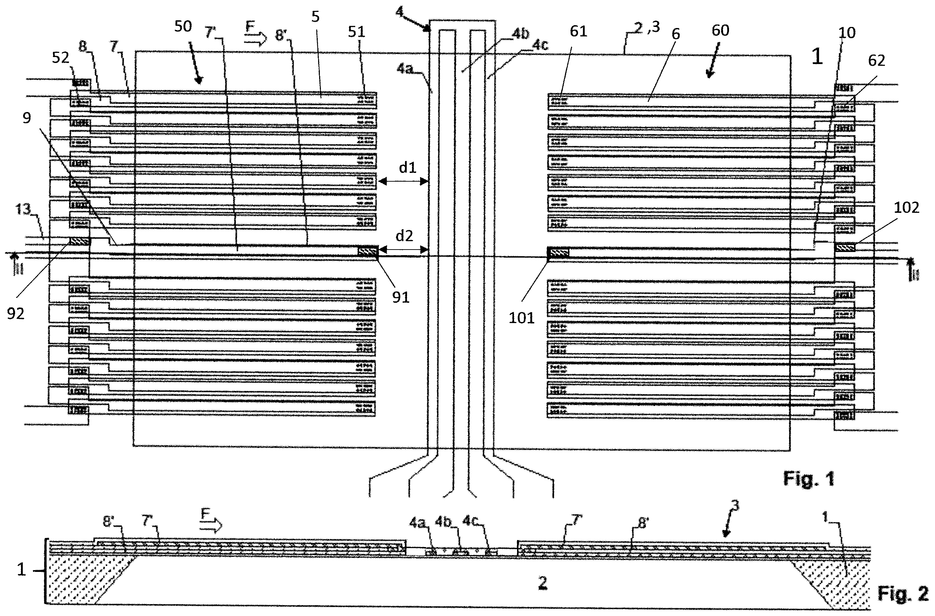

The device of Figs. 1 and 2 is designed as a chip based on a silicon substrate 1, even though another semiconductor or dielectric substrate could be used as well, such as a glass substrate. The substrate 1 preferably includes layers attached to it, such as the presently shown CMOS layers on top of a bulk material of the substrate 1, wherein a combination of layers and bulk material presently is considered as encompassed by the term "substrate". A recess or opening 2 is formed in the substrate 1 by etching techniques thereby generating a membrane 3 spanning the recess 2. It may be assumed that the membrane 3 only is represented by the portion spanning the recess 2. A heater 4 is arranged on or in the membrane 3, and preferably spans the membrane 3 transverse to a direction F of a flow of a fluid passing over the membrane 3. In the embodiment of Figs. 1 and 2, the heater 4 is formed by three parallel conductors 4a, 4b, 4c, the two outer conductors 4a, 4c being arranged, electrically, in parallel, while the center conductor 4b (having double cross section) is in series to the conductors 4a, 4c. Any other heater arrangement and configuration shall be included, too.

Two sensing thermopiles 50 and 60 are arranged on or in the substrate 2 on opposite sides of the heater 4, specifically upstream and downstream of heater 4 wherein the terms "upstream" and "downstream" are defined with respect to the flow direction F perpendicular to a longitudinal axis of the heater 4. Each sensing thermopile 50, 60 comprises a plurality of thermocouples 5, 6 in series. The number may vary subject to the geometry of the substrate 2 and subject to the application. Accordingly, the first sensing thermopile 50 left of the heater 4 comprises multiple first sensing thermocouples 5, while the second sensing thermopile 60 right of the heater 4 comprises multiple second sensing thermocouples 6. Each sensing thermocouple 5, 6 comprises a metal bar 7 (shown in continuous lines in Fig. 1) formed in a metal layer of an integrated circuit as well as a polysilicon bar 8 (shown in dotted lines in Fig. 1) formed in a polysilicon layer of the integrated circuit. The metal and polysilicon bars 7, 8 of neighboring thermocouples 5, 6 are interconnected at a first junction 51, 61 close to the heater 4, at a first distance d1 therefrom, on the membrane 3. The polysilicon and metal bars 8, 7 of neighboring thermocouples 5, 6 are additionally interconnected at a second junction 52, 62 distant from the heater 4, which second junctions 52, 62 presently are not located on the membrane 3, but over the bulk material of the substrate 1. The first sensing thermopile 50 is grouped into two sets of seven first thermocouples 5 each, and the second sensing thermopile 60 is grouped into two sets of seven second thermocouples 6 each, which number of thermocouples in a set may vary. The basic principle of operation of such a device is e.g. described in US 2003/0115952. A flow along flow direction F causes the distribution of heat from heater 4 to become asymmetric, which creates a difference of temperature between the first junctions 51 of the first sensing thermocouples 5 and the first junctions 61 of the second sensing thermocouples 6. At the same time, the second junctions 52 of the first thermocouples 5 as well as the second junctions 62 of the second thermocouples 6 remain at substantially constant temperatures due to the heat exchange through the thermally conducting substrate 1. Hence, a difference of voltages across the sensing thermopiles 50, 60 (or any value proportional thereto) - which voltages are the voltages between the junctions 51 and 52 on the one hand, and a voltage between the junctions 61 and 62 on the other hand -, which difference is called the "sensing signal" in the following, is substantially a measure of a temperature difference ΔT between the first junctions 51 of the first thermocouples 5, i.e. upstream of the heater 4, and the first junctions 61 of the second thermocouples 6 downstream of the heater 4. This temperature difference ΔT is a measure of the mass flow of the fluid.

As can be seen in Figs. 1 and 2, two additional monitoring thermocouples 9, 10 are provided on the device, each of which is located at the center of one of the sensing thermopiles 50, 60, is aligned in the parallel to the corresponding sensing thermocouples 5 and 6, and splits the corresponding thermopile 50, 60 into the sets of seven thermocouples 5, 6 each. Each monitoring thermocouple 9, 10 again comprises a metal bar 7' and a polysilicon bar 8' interconnected at a first junction 91, 101 located on the membrane 3 close to the heater 4, at a distance d2 therefrom. Presently, the distance d1 of the junctions 51 and 61 of the sensing thermocouples 5 and 6 closest to the heater 4 from the heater 4 is equal to the distance d2 of the junctions 91 and 101 of the monitoring thermocouples 9 and 10 closest to the heater 4 from the heater 4. Second ends of the metal bars 7' are e.g. connected to a polysilicon lead 13 at a second junction 92, 102. The second junctions 92, 102 of the monitoring thermocouples 9 and 10 are, in the embodiment of Figs. 1 and 2, located over the bulk of substrate 1.

The voltage/s across the first monitoring thermocouple/s 9, i.e. between the junctions 91 and 92, is preferably added to the voltage/s across the second monitoring thermocouple/s 10, i.e. between the junctions 101 and 102 to generate a monitoring signal TP.

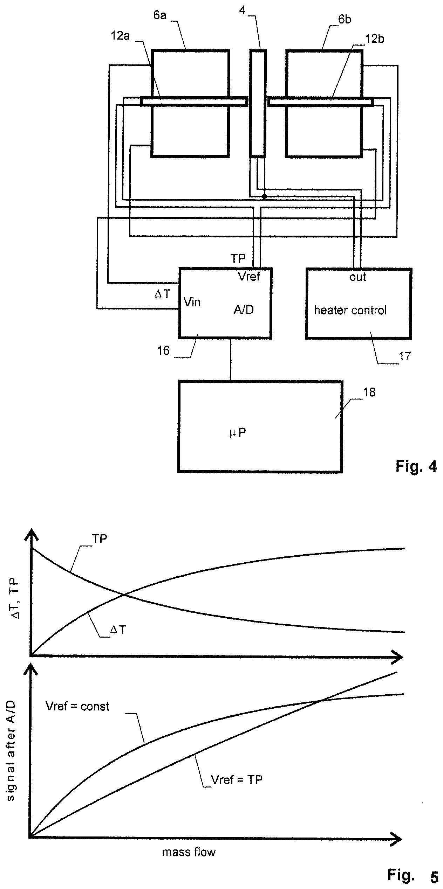

An example of circuitry embodied in the device is shown in Fig. 4. It comprises an A/D-converter 16 for digitizing the sensing signal ΔT, a heater control 17 for controlling the current through heater 4 and a microcontroller 18 for processing the digitized sensing signal and controlling the device. Advantageously, the circuitry for all the elements 16, 17 and 18 is integrated on substrate 1, but it can also be formed at least in part by external components.

Basically, the A/D-converter 16 can be any type, such as a successive-approximation ADC, a delta-encoded ADC or a sigma-delta converter. All such converter designs require a reference voltage Vref and generate a digitized value of the input signal normalized by Vref. The term "normalized", in this context, is to be understood such that the output value for a given input voltage depends linearly on the reciprocal value 1/Vref.

Advantageously, the A/D-converter 16 is a sigma-delta converter, such as it is e.g. disclosed in DE 101 29 300. The description of the section "A/D-Wandler" and its associated figure of that document are incorporated herein by reference.

As can be seen in Fig. 4, the monitoring signal TP is fed to a reference input of the A/D-converter 16 as a reference voltage Vref. The purpose of this measure is described below.

Preferably, heater control 17 of the embodiment of Fig. 4 regulates the power dissipated by heater 4 to a constant value. Alternatively, it may regulate the current through heater 4 to a constant value.

The dependence of the temperature difference ΔT as a function of flow v is shown in the upper graph of Fig. 5. For zero flow, ΔT = 0. With increasing flow, ΔT will start to rise linearly. At larger flows, however, the temperature of heater 4 (and therefore the monitoring signal TP) will decrease substantially because of the cooling effect that the passing fluid has on heater 4. Hence, for increasing flows v, the slope of the curve ΔT(v) will decrease as shown in the upper graph of Fig. 5.

If Vref of A/D-converter 16 were constant, the digitized value from A/D converter 16 would follow the curve "Vref = const" of the lower graph of Fig. 5. As will be understood by those skilled in the art, this will cause a decrease of measurement resolution for larger mass flows v because the resolution of the A/D-converter does not change over its range of input voltages.

However, as mentioned above, Vref is not constant, but rather it is set to the monitoring signal TP. Hence, the resolution of the A/D-converter will be coarser when the heater temperature is high, while the resolution will be finer when the heater temperature is low. This leads to a linearization of the digitized signal at the output of A/D-converter 16 as indicated by the curve "Vref = TP" in the bottom graph of Fig. 5.

Hence, using the monitoring signal TP as a reference voltage Vref allows to obtain a more constant digitization resolution over a wider range of mass flows, which in turn allows an increased accuracy of measurement and/or it allows to decrease the bit resolution of the A/D-converter.

At the same time, since the digitized value has been normalized by Vref, it is proportional to the ratio ΔT:TP. Therefore, variations of the Seebeck coefficient or of other parameters of the used thermocouples tend to be compensated. Such variations can e.g. be observed when the overall temperature of the device changes, or when membrane 3 is subjected to stress.

In view of this it will become apparent that the design of Fig. 1 has a further advantage: The monitoring thermocouples 9, 10 are parallel and close to the corresponding thermocouples 5, 6 of the sensing thermopiles 50, 60 therefore a strain in membrane 2 will affect both the thermocouples 9, 10 as well as the thermopiles 50, 60 in similar manner and will therefore be eliminated in the output value of A/D-converter 16.

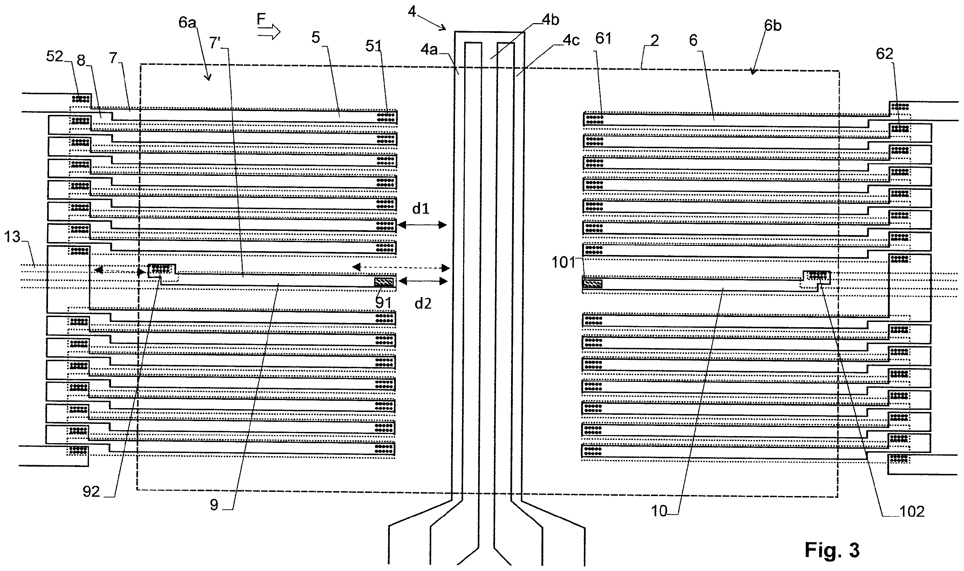

Fig. 3 shows an alternative design of the monitoring thermocouples 9, 10. It differs from the one of Fig. 1 in that its second junctions 92, 102 are now located over the membrane 3 and not over the bulk of the substrate 1. This has the advantage that the monitoring thermocouples 9, 10 can follow a change of temperature of heater 4 more quickly and more accurately.

The first junctions 91, 102 of the monitoring thermocouples 9, 10 remain at the same level as in Fig. 1, i.e. their distance d2 with respect to the heater 4 is the same as the distance d1 of the junctions 51, 61 of the sensing thermocouples 5, 6 with respect to the heater 4. However, the first junctions 91, 102 may even be located further away from the heater 4, such that d2 > d1, as is indicated by the dotted arrow. At the same time, the junctions 92 and 102 may remain in their position in the membrane 3 as shown in Fig. 3, or may be located over the bulk of the substrate 1 as is indicated by another dotted arrow.

In the embodiments described so far, the membrane 3 forms a "measuring region" in contrast to the remaining "regular region" of the chip surface supported by the bulk substrate 1. The measuring region has much lower heat conductance between the components located thereon than the regular region. At least part of each, the heater 4, the sensing thermopiles 50, 60 and the monitoring thermocouples 9, 10, is located on the measuring region. As it is known to the person skilled in the art, the membrane 3 presently embodied as a thin structure arranged over the opening or recess 2 in the semiconductor chip can be replaced by various other membrane-like structures, e.g. including a membrane completely closing the opening or recess 2 in the chip, or by a bridge or tongue extending over or into the opening or recess 2.

Instead of using a recess or opening 2, the measuring region could also be located on top of a layer of material having low thermal conductivity, such as a nanoporous silicon oxide.

The embodiments shown so far comprise two sensing thermopiles 50, 60 arranged upstream and downstream from heater 4. It is noted, though, that a single thermopile can be used, which is e.g. located downstream from the heater, in particular if the device is designed to measure flow in one direction only, or which extends between junctions upstream and downstream of the heater.

Similarly, the sensing thermocouples 5, 6 of the above embodiments are arranged symmetrically in respect to the longitudinal axis of heater 4. In particular if the device is designed to measure flow in one direction only, a non-symmetric design can be used as well.

Advantageously, a design of the thermocouples that is substantially symmetric to a line extending along flow direction F through the center of heater 4 is used. This allows to correct for asymmetries when positioning the device. For example, in the embodiment of Figs. 1 and 3, the monitoring thermocouples 9, 10 are located at the center of each of the sensing thermopiles 50, 60. Alternatively, two (or more) monitoring thermocouples 9, 10 could be provided for each sensing thermopile 50, 60 distributed symmetrically, e.g. one monitoring thermocouple 9, 10 at each end of each thermopile 50, 60. In addition or alternatively, in case of multiple first and second monitoring thermocouples 9, 10 each of the first monitoring thermocouples, possibly except for the above mentioned monitoring thermocouples 9, 10 laterally confining the thermopiles 50 and 60, is arranged between two of the corresponding sensing thermocouples 5, 6.

Even though, in the embodiments shown so far, most temperature sensors were embodied as thermopiles consisting of a plurality of thermocouples in series, it is noted that some or all of them may be replaced by single thermocouples (or vice versa) depending on desired signal voltages and available space.

In the embodiment of Figs. 4, the ratio ΔT:TP is calculated prior or during analog digital conversion. However, this ratio can also be calculated numerically in microcontroller 18 if the monitoring value TP is digitized as well.

It is noted that in the embodiments described above, each thermocouple used in the various thermopiles or alone comprises two conductors of a first and a second material, respectively. Advantageously, the same materials are used for all thermocouples in order to profit from a shared Seebeck coefficient. Advantageously, the first material is a polysilicon and the second material is a metal, such as aluminum, both being materials conventionally used in integrated circuit technology. In addition, and again in order to have thermocouples with uniform properties, all conductors of the thermocouples are preferably manufactured from the same two layers deposited on the substrate, e.g. one being a polysilicon layer and the other a metal layer. In a different embodiment, both the first material and the second material are polysilicon, preferably at different doping. In a further embodiment, both the first material and the second material comprise metal, preferably different metal.

## Claims

1. A device for measuring the flow of a fluid, comprising
a substrate (1),
a heater (4) arranged on the substrate (1),
at least one first and at least one second sensing thermocouple (5,6) arranged on the substrate (1) on opposite sides of the heater (4) for generating a sensing signal (ΔT) proportional to a temperature difference between a location upstream and downstream from the heater (4), wherein a junction (51,61) of the sensing thermocouples (5,6) closest to the heater (4) is arranged at a first distance (d1) from the heater (4),
at least a first and a second monitoring thermocouple (9,10) arranged on the substrate (1) on opposite sides of the heater (4) in parallel to the sensing thermocouples (5,6) for generating a monitoring signal (TP), wherein a junction (91,101) of the monitoring thermocouples (9,10) closest to the heater (4) is arranged at a second distance (d2) from the heater (4), and
a control circuit (18) adapted to measure a flow of the fluid over the heater (4) and the sensing thermocouples (5,6) subject to the sensing signal (ΔT) and the monitoring signal (TP),
**characterized in that** the second distance (d2) is equal to or more than the first distance (d1).

2. The device of claim 1, comprising
means (16, 18) for generating a signal proportional to a ratio of the sensing signal (ΔT) and the monitoring signal (TP).

3. The device of any of the preceding claims,
wherein the monitoring signal (TP) corresponds to a sum of voltages across the first and the second monitoring thermocouple (9,10).

4. The device of any of the preceding claims, comprising
a hole or recess (2) in the substrate (1) generating a membrane (3) extending over the hole or recess (2),
wherein the heater (4), the sensing thermocouples (7, 8) and the monitoring thermocouples (12a, 12b) are arranged at least partially on or in the membrane (3).

5. The device of claim 4,
wherein the junctions (51,61) of the first and the second sensing thermocouple (5,6) closest to the heater (4) and the junctions (91,101) of the first and the second monitoring thermocouple (9,10) closest to the heater (4) are arranged on or in the membrane (3).

6. The device of claim 4 or claim 5,
wherein junctions (52,62) of the first and the second sensing thermocouple (5,6) most distant from the heater (4) and junctions (92,102) of the first and the second monitoring thermocouple (9,10) most distant from the heater (4) are arranged on or in the substrate (1) outside the membrane (3).

7. The device of claim 4 or claim 5,
wherein junctions (52,62) of the first and the second sensing thermocouple (5,6) most distant from the heater (4) and junctions (92,102) of the first and the second monitoring thermocouple (9,10) most distant from the heater (4) are arranged on or in the membrane (3) .

8. The device of claim 4 or claim 5,
wherein junctions (52,62) of the first and the second sensing thermocouple (5,6) most distant from the heater (4) are arranged on or in the membrane (3) and junctions (92,102) of the first and the second monitoring thermocouple (9,10) most distant from the heater (4) are arranged on or in the substrate (1) outside the membrane (3), or vice versa.

9. The device of any of the preceding claims, further comprising
an analog/digital converter (16) for converting the sensing signal (ΔT), wherein the analog/digital converter (16) has a reference input and generates a digitized value of the sensing signal (ΔT) normalized by a signal (Vref) at the reference input, wherein the monitoring signal (TP) is applied to the reference input.

10. The device of any of the preceding claims,
wherein the heater (3) is arranged on the membrane (3) perpendicular to the first and second sensing and monitoring thermocouples (5,6,9,10).

11. The device of any of the preceding claims, comprising
multiple first and multiple second sensing thermocouples (5,6),
wherein the at least one first monitoring thermocouple (9) is arranged to divide the first sensing thermocouples (5) into a first set on one side of the at least one first monitoring thermocouple (9) and a second set on the other side of the at least one first monitoring thermocouple (9), the first and the second set comprising the same number of first sensing thermocouples (5), and
wherein the at least one second monitoring thermocouple (10) is arranged to divide the second sensing thermocouples (6) into a first set on one side of the at least one second monitoring thermocouple (10), and a second set on the other side of the at least one second monitoring thermocouple (10), the first and the second set comprising the same number of second sensing thermocouples (6).

12. The device of any of the preceding claims, comprising
multiple first monitoring thermocouples (9) arranged in parallel to the multiple first sensing thermocouples (5), and multiple second monitoring thermocouples (10) arranged in parallel to the multiple second sensing thermocouples (6),
wherein each of the first monitoring thermocouples (9) is arranged between two of the first sensing thermocouples (5), and
wherein each of the second monitoring thermocouples (10) is arranged between two of the second sensing thermocouples (6).

## Patentansprüche

1. Eine Vorrichtung zum Messen des Durchflusses eines Fluids, umfassend
ein Substrat (1),
eine auf dem Substrat (1) angeordnete Heizung (4), mindestens ein erstes und mindestens ein zweites Sensor-Thermoelement (5, 6), die auf dem Substrat (1) auf gegenüberliegenden Seiten der Heizung (4) angeordnet sind, um ein Sensorsignal (ΔT) zu erzeugen, das proportional zu einer Temperaturdifferenz zwischen einer Stelle stromaufwärts und stromabwärts der Heizung (4) ist, wobei eine Verbindungsstelle (51, 61) der Sensor-Thermoelemente (5, 6), die der Heizung (4) am nächsten liegt, in einem ersten Abstand (d1) von der Heizung (4) angeordnet ist,
mindestens ein erstes und ein zweites Überwachungsthermoelement (9, 10), die auf dem Substrat (1) auf gegenüberliegenden Seiten der Heizung (4) parallel zu den Sensor-Thermoelementen (5, 6) angeordnet sind, um ein Überwachungssignal (TP) zu erzeugen, wobei eine der Heizung (4) am nächsten liegende Verbindungsstelle (91, 101) der Überwachungsthermoelemente (9, 10) in einem zweiten Abstand (d2) von der Heizung (4) angeordnet ist, und eine Steuerschaltung (18), die derart ausgebildet ist, dass sie einen Durchfluss der Flüssigkeit über die Heizung (4) und die Sensor-Thermoelemente (5, 6) in Abhängigkeit vom Sensorsignal (ΔT) und dem Überwachungssignal (TP) misst,
**dadurch gekennzeichnet, dass** der zweite Abstand (d2) gleich oder grösser als der erste Abstand (d1) ist.

2. Die Vorrichtung nach Anspruch 1, umfassend Mittel (16, 18) zur Erzeugung eines Signals, das proportional zu einem Verhältnis des Sensorsignals (ΔT) und des Überwachungssignals (TP) ist.

3. Die Vorrichtung nach einem der vorangehenden Ansprüche,
wobei das Überwachungssignal (TP) einer Summe von Spannungen am ersten und dem zweiten Überwachungsthermoelement (9, 10) entspricht.

4. Die Vorrichtung nach einem der vorangehenden Ansprüche, umfassend
ein Loch oder eine Aussparung (2) im Substrat (1), das/die eine Membran (3) erzeugt, die sich über das Loch oder die Aussparung (2) erstreckt,
wobei die Heizung (4), die Sensor-Thermoelemente (7, 8) und die Überwachungsthermoelemente (12a, 12b) zumindest teilweise auf oder in der Membran (3) angeordnet sind.

5. Die Vorrichtung nach Anspruch 4,
wobei die Verbindungsstellen (51, 61) des ersten und des zweiten Sensorthermoelements (5, 6), die der Heizung (4) am nächsten liegen, und die Verbindungsstellen (91, 101) des ersten und des zweiten Überwachungsthermoelements (9, 10), die der Heizung (4) am nächsten liegen, auf oder in der Membran (3) angeordnet sind.

6. Die Vorrichtung nach Anspruch 4 oder Anspruch 5,
wobei Verbindungsstellen (52, 62) des ersten und des zweiten Sensorthermoelements (5, 6), die am weitesten von der Heizung (4) entfernt sind, und Verbindungsstellen (92, 102) des ersten und des zweiten Überwachungsthermoelements (9, 10), die am weitesten von der Heizung (4) entfernt sind, auf oder im Substrat (1) außerhalb der Membran (3) angeordnet sind.

7. Die Vorrichtung nach Anspruch 4 oder Anspruch 5,
wobei Verbindungsstellen (52, 62) des ersten und des zweiten Sensorthermoelements (5, 6), die am weitesten von der Heizung (4) entfernt sind, und Verbindungsstellen (92, 102) des ersten und des zweiten Überwachungsthermoelements (9, 10), die am weitesten von der Heizung (4) entfernt sind, auf oder in der Membran (3) angeordnet sind.

8. Die Vorrichtung nach Anspruch 4 oder Anspruch 5,
wobei Verbindungsstellen (52, 62) des ersten und des zweiten Sensorthermoelements (5, 6), die am weitesten von der Heizung (4) entfernt sind, auf oder in der Membran (3) angeordnet sind und Verbindungsstellen (92, 102) des ersten und des zweiten Überwachungsthermoelements (9, 10), die am weitesten von der Heizung (4) entfernt sind, auf oder im Substrat (1) außerhalb der Membran (3) angeordnet sind oder umgekehrt.

9. Die Vorrichtung nach einem der vorangehenden Ansprüche, weiter umfassend
einen Analog/Digital-Wandler (16) zum Wandeln des Sensorsignals (ΔT), wobei der Analog/Digital-Wandler (16) einen Referenzeingang aufweist und einen digitalisierten Wert des Sensorsignals (ΔT) erzeugt, der durch ein Signal (Vref) am Referenzeingang normiert ist, wobei das Überwachungssignal (TP) an den Referenzeingang angelegt wird.

10. Die Vorrichtung nach einem der vorangehenden Ansprüche,
wobei die Heizung (4) auf der Membran (3) senkrecht zu den ersten und zweiten Sensorthermoelementen und Überwachungsthermoelementen (5, 6, 9, 10) angeordnet ist.

11. Die Vorrichtung nach einem der vorangehenden Ansprüche, umfassend
mehrere erste und mehrere zweite Thermoelemente (5,6), wobei das mindestens eine erste Überwachungsthermoelement (9) derart angeordnet ist, dass es die ersten Sensorthermoelemente (5) in einen ersten Satz auf einer Seite des mindestens einen ersten Überwachungsthermoelements (9) und einen zweiten Satz auf der anderen Seite des mindestens einen ersten Überwachungsthermoelements (9) unterteilt, wobei der erste und der zweite Satz die gleiche Anzahl von ersten Sensorthermoelementen (5) umfasst, und
wobei das mindestens eine zweite Überwachungsthermoelement (10) derart angeordnet ist, dass es die zweiten Sensorthermoelemente (6) in einen ersten Satz auf einer Seite des mindestens einen zweiten Überwachungsthermoelements (10) und einen zweiten Satz auf der anderen Seite des mindestens einen zweiten Überwachungsthermoelements (10) unterteilt, wobei der erste und der zweite Satz die gleiche Anzahl von zweiten Sensorthermoelementen (6) umfasst.

12. Die Vorrichtung nach einem der vorangehenden Ansprüche, umfassend
mehrere erste Überwachungs-Thermoelemente (9), die parallel zu den mehreren ersten Sensorthermoelementen (5) angeordnet sind, und mehrere zweite Überwachungsthermoelemente (10), die parallel zu den mehreren zweiten Sensorthermoelementen (6) angeordnet sind, wobei jedes der ersten Überwachungsthermoelemente (9) zwischen zwei der ersten Sensorthermoelemente (5) angeordnet ist, und
wobei jedes der zweiten Überwachungsthermoelemente (10) zwischen zwei der zweiten Sensorthermoelemente (6) angeordnet ist.

## Revendications

1. Un dispositif pour mesurer le débit d'un fluide, comprenant
un substrat (1),
un chauffage (4) disposé sur le substrat (1),
au moins un premier et au moins un deuxième thermocouple de détection (5, 6) disposés sur le substrat (1) sur des côtés opposés du chauffage (4) pour générer un signal de détection (ΔT) proportionnel à une différence de température entre un emplacement en amont et en aval du chauffage (4), dans lequel une jonction (51, 61) des thermocouples de détection (5, 6) la plus proche du chauffage (4) est disposée à une première distance (d1) du chauffage (4),
au moins un premier et un deuxième thermocouple de surveillance (9, 10) disposés sur le substrat (1) sur des côtés opposés du chauffage (4) parallèlement aux thermocouples de détection (5, 6) pour générer un signal de surveillance (TP), une jonction (91, 101) des thermocouples de surveillance (9, 10) le plus proche du chauffage (4) étant disposée à une deuxième distance (d2) du chauffage (4), et
un circuit de commande (18) adapté pour mesurer un écoulement du fluide sur le chauffage (4) et les thermocouples de détection (5, 6) soumis au signal de détection (ΔT) et au signal de surveillance (TP), **caractérisé en ce que** la deuxième distance (d2) est égale ou supérieure à la première distance (d1).

2. Le dispositif selon la revendication 1, comprenant des moyens (16, 18) pour générer un signal proportionnel à un rapport entre le signal de détection (ΔT) et le signal de surveillance (TP).

3. Le dispositif selon l'une quelconque des revendications précédentes,
dans lequel le signal de surveillance (TP) correspond à une somme des tensions aux bornes des premier et deuxième
thermocouples de surveillance (9, 10).

4. Le dispositif selon l'une quelconque des revendications précédentes, comprenant
un trou ou une cavité (2) dans le substrat (1) générant une membrane (3) s'étendant au-dessus du trou ou de la cavité (2),
dans lequel le chauffage (4), les thermocouples de détection (7, 8) et les thermocouples de surveillance (12a, 12b) sont disposés au moins partiellement sur ou dans la membrane (3).

5. Le dispositif selon la revendication 4,
dans lequel les jonctions (51, 61) des premier et deuxième thermocouples de détection (5, 6) les plus proches du chauffage (4) et les jonctions (91, 101) des premier et deuxième thermocouples de surveillance (9, 10) les plus proches du chauffage (4) sont disposées sur ou dans la membrane (3).

6. Le dispositif selon la revendication 4 ou la revendication 5,
dans lequel des jonctions (52, 62) des premier et deuxième thermocouples de détection (5, 6) les plus éloignés du chauffage (4) et des jonctions (92, 102) des premier et deuxième thermocouples de surveillance (9, 10) les plus éloignés du chauffage (4) sont disposées sur ou dans le substrat (1) à l'extérieur de la membrane (3).

7. Le dispositif selon la revendication 4 ou la revendication 5,
dans lequel des jonctions (52, 62) des premier et deuxième thermocouples de détection (5, 6) les plus éloignés du chauffage (4) et des jonctions (92, 102) des premier et deuxième thermocouples de surveillance (9, 10) les plus éloignés du chauffage (4) sont disposées sur ou dans la membrane (3).

8. Le dispositif selon la revendication 4 ou la revendication 5,
dans lequel des jonctions (52, 62) des premier et deuxième thermocouples de détection (5, 6) les plus éloignés du chauffage (4) sont disposées sur ou dans la membrane (3) et des jonctions (92, 102) des premier et deuxième thermocouples de surveillance (9, 10) les plus éloignés du chauffage (4) sont disposées sur ou dans le substrat (1) à l'extérieur de la membrane (3), ou vice versa.

9. Le dispositif selon l'une quelconque des revendications précédentes, comprenant en outre un convertisseur analogique/numérique (16) pour convertir le signal de détection (ΔT), dans lequel le convertisseur analogique/numérique (16) présente une entrée de référence et génère une valeur numérisée du signal de détection (ΔT) normalisée par un signal (Vref) à l'entrée de référence, dans lequel le signal de contrôle (TP) est appliqué à l'entrée de référence.

10. Le dispositif selon l'une des revendications précédentes,
dans lequel le chauffage (3) est disposé sur la membrane (3) perpendiculairement aux premier et deuxième thermocouples de détection et de surveillance (5, 6, 9, 10).

11. Le dispositif selon l'une quelconque des revendications précédentes, comprenant
plusieurs premiers et plusieurs deuxièmes thermocouples de détection (5,6),
dans lequel le au moins un premier thermocouple de surveillance (9) est agencé pour diviser les premiers thermocouples de détection (5) en un premier ensemble sur un côté du au moins un premier thermocouple de surveillance (9) et un deuxième ensemble sur l'autre côté du au moins un premier thermocouple de surveillance (9), le premier et le deuxième ensemble comprenant le même nombre de premiers thermocouples de détection (5), et dans lequel le au moins un deuxième thermocouple de surveillance (10) est agencé pour diviser les deuxièmes thermocouples de détection (6) en un premier ensemble sur un côté du au moins un deuxième thermocouple de surveillance (10), et un deuxième ensemble sur l'autre côté du au moins un deuxième thermocouple de surveillance (10), le premier et le deuxième ensemble comprenant le même nombre de deuxièmes thermocouples de détection (6).

12. Le dispositif selon l'une quelconque des revendications précédentes, comprenant
plusieurs premiers thermocouples de surveillance (9) disposés en parallèle avec les premiers thermocouples de détection multiples (5), et plusieurs deuxièmes thermocouples de surveillance (10) disposés en parallèle avec les deuxièmes thermocouples de détection multiples (6), dans lequel chacun des premiers thermocouples de surveillance (9) est disposé entre deux des premiers thermocouples de détection (5), et
dans lequel chacun des deuxièmes thermocouples de surveillance (10) est disposé entre deux des deuxièmes thermocouples de détection (6).
